# EUROPEAN PATENT SPECIFICATION

(11) **EP 3 715 688 B1**
(45) Date of publication and mention of the grant of the patent: **28.04.2021**
(21) Application number: 19165432.6
(22) Date of filing: 27.03.2019
(51) Int. Cl.: F16K 37/00, F16K 27/06, F16K 27/04, G01F 1/66, G01F 15/00

(54) **INTEGRATED VALVE**
INTEGRIERTES VENTIL
SOUPAPE INTÉGRÉE

(43) Date of publication of application: 30.09.2020
(73) Proprietor: Siemens Schweiz AG, 8047 Zürich (CH)
(72) Inventor: Huber, Wolfgang, 6333 Hünenberg See (CH); Petry, Karl-Heinz, 8864 Reichenburg (CH)
(74) Representative: Maier, Daniel Oliver

(56) References cited:
- EP-A1- 2 937 759
- WO-A1-2019/152040
- JP-A- H 109 916
- JP-A- 2017 173 200
- US-A1- 2016 305 911
- US-A1- 2018 291 594

## Description

### Background

The present disclosure relates to a valve such as a pressure independent control valve. The present disclosure focuses on an integrated valve wherein the flow of a fluid is a function of the position of a throttle. More particularly, the valve as disclosed herein achieves a flow rate that is substantially independent of the pressure at the outlet of the valve.

Flow control valves are commonly employed in circuits for heating, ventilation and/or air-conditioning (HVAC). These circuits typically convey a fluid such as water or a blend thereof thereby providing heating and/or cooling. A flow control valve affords controlled flow of a fluid through the conduits of the HVAC circuit.

The amount of fluid flowing through the valve is substantially governed by the position of the throttle. The position of the throttle is typically set by an actuator. The actuator sets the position of the throttle in response to a signal from a controller.

The European patent application EP2937759A1 was filed on 4 April 2014. EP2937759A1 was published on 28 October 2015. The patent application EP2937759A1 teaches a pressure regulated valve with a valve body 1, with an inlet port 2, and with an outlet port 3. A piston 9 is arranged in a fluid path 4 extending between the inlet port 2 and the outlet port 3. A resilient member such as a spring 13 urges the piston 9 to open the fluid path 4. A channel 15 connects the inlet port 2 to a first end of the piston 9. The channel 15 is separated from the outlet port 3 of the valve via a diaphragm 18. Due to the channel 15 and the diaphragm 18, the piston 9 moves in response to a pressure drop between the inlet port 2 and the outlet port 3.

Pipes and conduits for valves can be classified in accordance with their diameters. The standards EN ISO 6708:1995 and EN 10255:2004 establish a system of nominal diameter (DN) designations for such pipes and conduits. Installations for heating, ventilation and/or air conditioning commonly employ valves with DN 65 and/or with DN 80 cores. That is, the active parts of such valves have dimensions that can be classified under the above standards as DN 65 and/or as DN 80. The active parts of pressure independent control valves typically comprise moveable parts such as throttles and/or pistons.

An international application WO2014/029405A1 was filed on 22 August 2013 and was published on 27 February 2014. The international application WO2014/029405A1 teaches an ultrasonic flow meter comprising a connection arrangement. The flow meter according to WO2014/029405A1 comprises a pair of ultrasonic transducers 6, 7. Three ultrasonic reflectors 8, 9, 10 are fitted into depressions in a guide element 52 inside a meter housing 2. The ultrasonic reflectors 8, 9, 10 provide a path for propagation of ultrasonic signals between the ultrasonic transducers 6, 7

US2018291594, JPH109916 and JP2017173200 each discloses a valve with a pair of ultrasonic transducers in corresponding slots in a longer conduit.

The present disclosure teaches a valve that affords integration of a flow sensor. The dimensions of the valve of the instant disclosure correspond to the dimensions of a standard-sized valve.

### Summary

In prior art solution, the dimensions of the flow restrictors of pressure independent control valves preclude the integration of a flow sensor inside the inlet conduit. The present disclosure leverages limitations in maximum flow that differ between pressure independent control valves and conventional valves. The maximum allowable flow through an electronic pressure independent control valve is governed by a maximum flow setting. By contrast, the maximum allowable flow through a conventional valve is determined by its maximum flow coefficient Kvs. This difference between pressure independent control valves and conventional valves affords valve cores with smaller dimensions to be used.

Reduced diameters of valve cores of then allow technical constraints on inlet conduits of such valves to be relaxed. Inlet conduits of pressure integrated control valves can thus take up some extra space within the valve assembly. Larger inlet conduits eventually afford integration of ultrasonic flow meters in these inlet conduits. The same or similar considerations apply to outlet conduits.

### Brief description of the drawings

Various features will become apparent to those skilled in the art from the following detailed description of the disclosed non-limiting embodiments. The drawings that accompany the detailed description can be briefly described as follows:
FIG 1 is a cut-away view of a prior art control valve.
FIG 2 is a plot of pressure difference versus flow rate.
FIG 3 is a cut-away view of an integrated valve according to the instant disclosure.
FIG 4 is another cut-away view of the integrated valve in a plane perpendicular to the plane of FIG 3.
FIG 5 is cut-away view of an integrated valve with a ball-type valve member, which does not form part of the claimed subject-matter.

### Detailed description

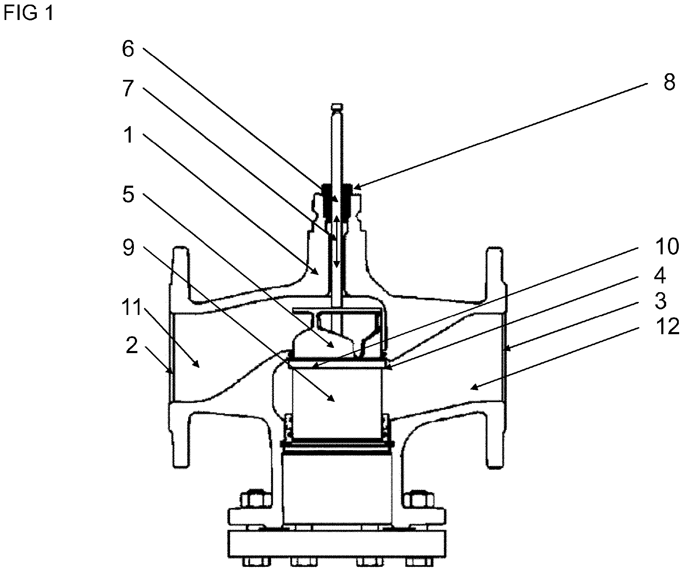

FIG 1 shows the various principal and optional components of the prior art control valve. The control valve comprises a valve body 1 with openings forming an inlet port 2 and an outlet port 3. The inlet port 2 and the outlet port 3 afford flow of a fluid through the valve. In a preferred embodiment, the fluid comprises a liquid. In particularly preferred embodiment, the fluid flowing through the control valve comprises water or mixture containing water.

A fluid conduit 4 extends between the inlet port 2 and the outlet port 3.

At the inlet port 2 of the pressure independent control valve, the fluid has a pressure of substantially p1. The pressure of the fluid at the outlet port 3 of the valve is substantially p3. The (overall) pressure of the fluid inside the fluid conduit 4 substantially is p2.

A throttle 5 is movably mounted inside a seat. The throttle 5 is disposed in the fluid conduit 4. The throttle 5 effectively varies and limits the flow rate of the fluid through the pressure independent control valve.

In an embodiment, the position of the throttle 5 changes by moving a stem 6 back and forth along the direction indicated by the arrow 7. In an alternate embodiment, the throttle 5 turns between an open position and a closed position by rotation of the stem 6 about an axis indicated by the arrow 7. To that end, the stem 6 and the throttle 5 are rotatable about the axis indicated by the arrow 7.

A bearing 8 restricts the movement of the stem 6 against the valve body 1. Accordingly, the walls of the valve body surrounding the throttle 5 and the bearing 8 act as guide elements for the throttle 5.

The bearing 8 may be of the ball bearing type and/or of the friction-bearing type. It is envisaged that the bearing 8 also seals the pressure independent control valve so that no fluid will leak from the pressure independent control valve.

A (hollow) piston 9 is movably mounted inside another seat in the valve body 1. The hollow piston 9 has a cover 10 that is exposed to the pressure p2 in the fluid conduit 4. It is envisaged that the shape of the cover may be uneven or may be substantially flat. Those parts of the hollow piston 9 that are exposed to the pressure p2 inside the fluid conduit 4 are impermeable to fluid. Consequently, no fluid originating from the fluid conduit 4 will enter the piston 9 through the walls of the piston 9.

It is envisaged that a profile of the piston 9 can be circular, oval, triangular, quadratic, rectangular. The skilled person chooses any profile of the piston that meets technical requirements.

Any movement of the piston 9 is restricted by a seat in the valve body 1. Preferably, the seat for the piston 9 effectively restricts movement of the piston 9 to directions toward or away from the throttle 5. The walls of the seat can restrict movement of the piston 9 either through a friction-type bearing and/or through a ball bearing. It is envisaged that the bearing inhibits and/or prevents fluid flow through the passage in between the piston 9 and the walls of the seat in the valve body 1. It is also envisaged that the same bearing is optimized for low friction and/or for minimum hysteresis.

The piston 9, the cover 10, the throttle 5, and the portion of the conduit 4 enclosing these active parts form the core of the valve. An inlet conduit 11 extends from the inlet port 2 to the core of the pressure independent control valve. Also, an outlet conduit 12 extends from the core of the pressure independent control valve to the outlet port 3.

The pressure independent control valve also comprises a biasing member. The biasing member urges the displaceable piston 9 such that the volume of the fluid conduit 4 increases. That is, the biasing member applies a force to the piston and to the cover 10 thereby urging the cover 10 away from the throttle 5. The biasing member, in particular, urges the displaceable piston 9 such that the volume of the portion of the conduit 4 enclosing the active parts increases. The biasing member can, by way of non-limiting example, be a spring such as a helical spring and/or a compression spring and/or a helical compression spring.

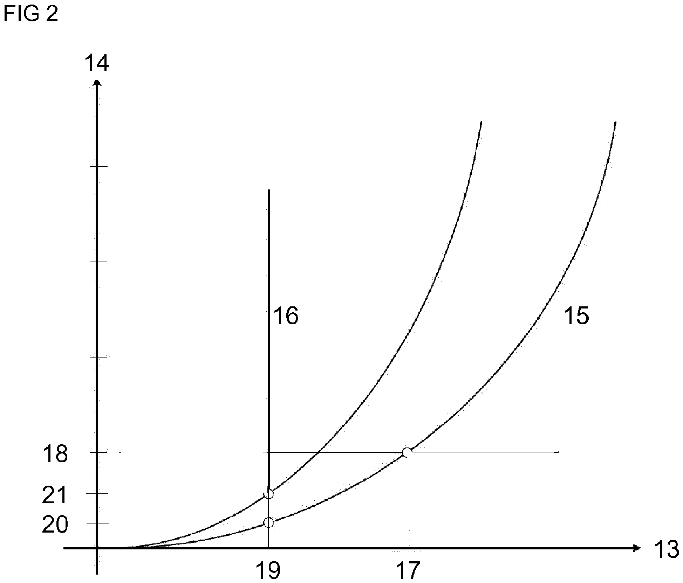

FIG 2 shows a plot of pressure difference 14 versus flow rate 13. FIG 2 shows two curves. A first curve 15 describes a relationship between pressure difference and flow rate for a valve without pressure independence. A second curve 16 describes a relationship between pressure difference and flow rate for a(n electronic) pressure independent control valve.

The same pressure differences between inlet and outlet apply to the two curves 15 and 16. The valve without pressure independence experiences a first pressure difference 18 at a first flow rate 17. That is, if a pressure difference 18 is applied between the inlet and the outlet, the flow rate will attain the flow rate value 17. The same valve experiences a second pressure difference 20 at a second flow rate 19. That is, if a pressure difference 20 is applied between the inlet and the outlet, the flow rate will attain the flow rate value 19.

The pressure independent control valve characterized by curve 16 experiences an elevated pressure drop 21 at the flow rate value 19. This elevated pressure drop 21 is larger than the pressure drop 20 experienced by the valve without pressure independence. In other words, for a given flow rate the pressure drop across the pressure independent control valve exceeds the pressure drop across the valve without pressure independence.

This difference between valves with and without pressure independence is explained by a maximum flow setting. The maximum flow setting limits the flow rate through an (electronic) pressure independent control valve. By contrast, flow rates through valves without pressure independence are limited by their flow coefficients. It follows from the flow limitation according to curve 16 that flow rates cannot increase beyond the flow rate value 19. This constraint affords (electronic) pressure independent control valves with smaller active parts. In particular, the conduits enclosing the active parts of electronic pressure independent control valves can be reduced in diameters compared to valves without pressure independence.

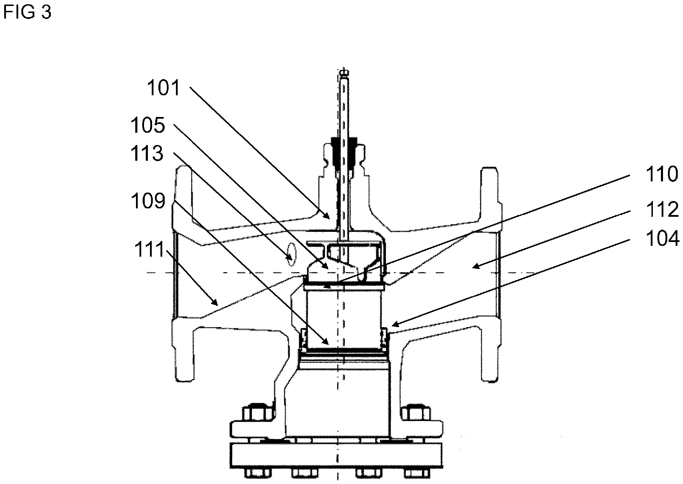

The pressure independent control valve shown in FIG 3 builds on these insights. The active parts such as the throttle 105, the piston 109, and the cover 110 of the valve depicted in FIG 3 have been reduced in size. The diameter of the portion of the fluid conduit 104 enclosing the active parts has been reduced accordingly.

The diameter of the portion of the fluid conduit 104 enclosing the active parts can then be downsized from DN 80 to DN 65. It is also envisaged that the diameter of the portion of the fluid conduit 104 enclosing the active parts is downsized from DN 100 to DN 80. It is still further envisaged that the diameter of the portion of the fluid conduit 104 enclosing the active parts is downsized from DN 65 to DN 50. The above sizes and/or diameters refer to sizes and/or diameters defined by the standard EN 10255:2004.

The fluid conduit 104 preferably comprises a fluid channel and/or a flow path.

The reduced dimensions of the core 105, 109, 110 afford a longer inlet conduit 111. In particular, an inlet conduit 111 can be chosen that is longer compared to the inlet conduit 11 of the solution depicted in FIG 1. The dimensions of the valve body 101 shown in FIG 2 remain the same as the dimensions of the valve body 1 shown in FIG 1.

Due to reduced dimensions, existing valves can be retrofitted with active parts according to the instant disclosure.

It is envisaged that the valve body 101 is or comprises a valve housing 101. In an embodiment, the housing 101 is made of a metallic material such as steel, in particular austenitic (stainless) steel or ferrite steel. In an alternate embodiment, the housing 101 is made of aluminum (alloy) or gunmetal or brass. In yet another alternate embodiment, the housing 101 is made of a polymeric material. According to an aspect, the housing 101 is manufactured using an additive manufacturing technique such as three-dimensional printing. Manufacture of the housing 101 can, in particular, involve selective laser sintering. In an embodiment, the housing 101 is made of a grey cast material and/or of nodular cast iron.

According to an aspect of the present disclosure, the fluid conduit 104 is or comprises a polymeric member. It is also envisaged that manufacture of the fluid conduit 104 and/or of the inlet conduit 111 and/or of the outlet conduit 112 involves additive manufacturing such as three-dimensional printing. Manufacture of the fluid conduit 104 and/or of the inlet conduit 111 and/or of the outlet conduit 112 can involve selective laser sintering.

The fluid conduit 104 and/or the inlet conduit 111 and/or the outlet conduit 112 can, by way of non-limiting example, be polymeric or comprise a polymeric member, the polymer being selected from at least one of:
- an epoxy polymer, or
- a polytetrafluoroethylene, or
- a polyethylene polymer, or
- a polyethylene terephthalate polymer, or
- a polyester polymer, or
- a blended form thereof.

The skilled person chooses a material such as a polymer that absorbs ultrasonic waves. That is, the skilled person chooses a material having an acoustic impedance that matches the acoustic impedance of the fluid in the fluid conduit 104.

According to an aspect, the inlet conduit 111 and/or the outlet conduit 112 have a circular cross-section or a substantially circular cross-section.

The added length of the inlet conduit 111 affords some extra space 113. A flow sensor is thus arranged in the portion 113 of the inlet conduit 111. According to the invention, an ultrasonic flow sensor is arranged in the portion 113 of the inlet conduit 111. In an example not forming part of the claimed invention, a flow sensor such as a sensor employing constant temperature anemometry and/or constant power anemometry can be arranged in the portion 113 of the conduit 111. The added length of the inlet conduit 111 also affords extra space 113. A turbulent flow of a fluid through inlet conduit 111 may, at least in part, calm in the section provided by extra space 113.

In an alternate embodiment not shown in FIG 2, and which does not form part of the claimed subject-matter, the reduced size
of the valve core 109, 109, 110 affords a longer outlet conduit 112. In particular, an outlet conduit 112 can be chosen that is longer compared to the outlet conduit 12 of the solution depicted in FIG 1. The dimensions of the valve body 101 shown in FIG 2 remain the same as the dimensions of the valve body 1 shown in FIG 1.

The added length of the outlet conduit 112 allows some extra space. A flow sensor can thus be arranged in the extra portion of the outlet conduit 112. In particular, an ultrasonic flow sensor can be arranged in the extra portion of the outlet conduit 112. Also, a flow sensor such as a sensor employing constant temperature anemometry and/or constant power anemometry can be arranged in the extra portion of the conduit 112.

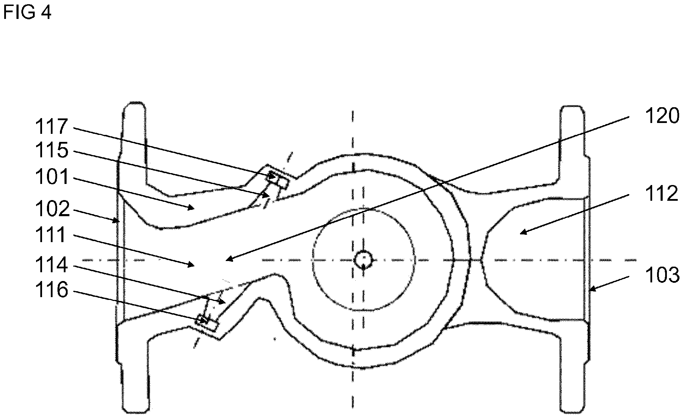

Now referring to FIG 4, a profile is depicted of the integrated valve of the present disclosure in a plane perpendicular to the plane of FIG 3. The pressure independent control valve shown in FIG 4 comprises a body 101 having an inlet conduit 111 as well as an outlet conduit 112. The inlet conduit 111 has a length dimension between the inlet port 102 and the valve core 105, 109, 110. This length dimension is the shortest distance between the inlet port 102 and the portion of the fluid conduit 104 enclosing the valve core 105, 109, 110.

The outlet conduit 112 also has a length dimension between the outlet port 103 and the valve core 105, 109, 110. That length dimension is the shortest distance between the outlet port 103 and the portion of the fluid conduit 104 enclosing the valve core 105, 109, 110.

According to the invention, the length dimension of the inlet conduit 111 exceeds the length dimension of the outlet conduit 112. The length of the inlet conduit 111 exceeds the length of the outlet conduit 112 by at least ten percent, preferably by at least twenty percent. The length of the inlet conduit 111 still more preferably exceeds the length of the outlet conduit 112 by at least thirty percent. It is also envisaged that the length of the inlet conduit 112 exceeds the length of the outlet conduit 112 by at least ten millimeters, yet more preferably by at least twenty millimeters. The length of the inlet conduit 111 still more preferably exceeds the length of the outlet conduit 112 by at least fifty millimeters. Long inlet conduits 111 confer advantages in terms of extra space for flow rate measurements.

In an alternate embodiment not shown in FIG 4, and which does not form part of the claimed subject-matter, the length dimension of the outlet conduit 112 exceeds the length dimension of the outlet conduit 111. The length of the outlet conduit 112 preferably exceeds the length of the inlet conduit 111 by at least ten percent, yet more preferably by at least twenty percent. The length of the outlet conduit 112 still more preferably exceeds the length of the inlet conduit 111 by at least thirty percent. It is also envisaged that the length of the outlet conduit 111 exceeds the length of the inlet conduit 111 by at least ten millimeters, yet more preferably by at least twenty millimeters. The length of the outlet conduit 112 still more preferably exceeds the length of the inlet conduit 111 by at least fifty millimeters. Long outlet conduits 112 confer advantages in terms of extra space for flow rate measurements. The inlet conduit 111 as shown on FIG 4 provides a pair of slots 114, 115. The slots 114, 115 each receive an ultrasonic transducer 116, 117. It is envisaged that the slots 114, 115 are and/or comprise recesses in the valve body 101. It is also envisaged that the slots 114, 115 are and/or comprise depressions in the valve body 101. The slots 114, 115 are advantageously arranged on opposite sides of the inlet conduit 111. A first slot 114 of the pair of slots can, in particular, be arranged upstream of a second slot 115 of the pair of slots. An upstream direction inside the inlet conduit 111 is defined as a direction opposite to the direction of fluid flow. The upstream direction extends from the valve core 105, 109, 110 to the inlet port 102.

Two ultrasonic transducers 116, 117 are secured relative to and/or mounted to the slots 114, 115. The ultrasonic transducers 116, 117 are arranged at a distance. A first ultrasonic transducer 116 is preferably arranged upstream of a second ultrasonic transducer 117. In an embodiment, the ultrasonic transducers 116, 117 are spaced at least twenty millimeters apart. The ultrasonic transducers 116, 117 can also be spaced at least fifty millimeters apart or even at least one hundred millimeters apart. Long distances between ultrasonic transducers can improve on accuracy.

In an embodiment, the first ultrasonic transducer 116 is an ultrasonic emitter as well as an ultrasonic receiver. In an alternate embodiment, the first ultrasonic transducer 116 exclusively emits ultrasonic signals but does not receive such signals. In an embodiment, the second ultrasonic transducer 117 is an ultrasonic emitter as well as an ultrasonic receiver. In an alternate embodiment, the second ultrasonic transducer 117 exclusively receives ultrasonic signals but does not emit such signals. Flow meters with ultrasonic transducers 116, 117 with limited capabilities confer advantages in terms of reduced complexity and reduced cost.

The ultrasonic transducers 116, 117 ideally operate at frequencies above two hundred kiloHertz. According to a particular aspect, the ultrasonic transducers 116, 117 operate at frequencies larger than five hundred kiloHertz or even larger than one MegaHertz. Larger frequencies generally reduce interference by other sources of ultrasonic signals.

It is envisaged that the first ultrasonic transducer 116 is a piezoelectric transducer. It is also envisaged that the first ultrasonic transducer 116 is a capacitive transducer. It is envisaged that the second ultrasonic transducer 117 is a piezoelectric transducer. It is also envisaged that the second ultrasonic transducer 117 is a capacitive transducer. The two transducers 116, 117 preferably employ the same measurement principle. That is, the two transducers 116, 117 are either both piezoelectric transducers or are both capacitive transducers.

In an alternate embodiment not shown in FIG 4, and which does not form part of the claimed subject-matter, the outlet conduit 112 provides a pair of slots. The slots of the outlet conduit 112 ideally each receive an ultrasonic transducer. It is envisaged that the slots of the outlet conduit 112 are and/or comprise recesses in the valve body 101. It is also envisaged that the slots of the outlet conduit 112 are and/or comprise depressions in the valve body 101. The slots are advantageously arranged on opposite sides of the outlet conduit 112. A first slot of the pair of slots can, in particular, be arranged upstream of a second slot of the pair of slots. An upstream direction inside the outlet conduit 112 is defined as a direction opposite to the direction of fluid flow. The upstream direction extends from the outlet port 103 to the valve core 105, 109, 110.

Two ultrasonic transducers are secured relative to and/or mounted to the slots provided by the outlet conduit 112. The ultrasonic transducers are arranged at a distance. A first ultrasonic transducer is preferably arranged upstream of a second ultrasonic transducer. In an embodiment, the ultrasonic transducers associated with the outlet conduit 112 are spaced at least twenty millimeters apart. The ultrasonic transducers can also be spaced at least fifty millimeters apart or even at least one hundred millimeters apart. Long distances between ultrasonic transducers can improve on accuracy.

The skilled person applies the same technical considerations to the transducers associated with the inlet conduit 111 and to the transducers associated with the outlet conduit 112.

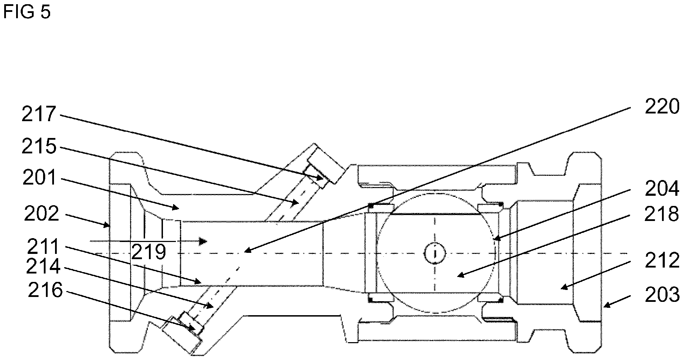

FIG 5 shows an example not forming part of the claimed subject-matter of an integrated valve with a ball-type valve member 218. The core of the integrated valve comprises a ball-type valve member 218 and a portion of the fluid conduit 204 enclosing the ball-type valve member 218.

The fluid conduit 204 preferably comprises a fluid channel and/or a flow path.

The integrated valve with the ball-type valve member comprises a valve body 201. The valve body 201 advantageously is or comprises a valve housing. The valve body 201 provides an inlet conduit 211 as well as an outlet conduit 212.

The inlet conduit 211 as shown on FIG 5 provides a pair of slots 214, 215. The slots 214, 215 ideally each receive an ultrasonic transducer 216, 217. It is envisaged that the slots 214, 215 are and/or comprise recesses in the valve body 201. It is also envisaged that the slots 214, 215 are and/or comprise depressions in the valve body 201. The slots 214, 215 are advantageously arranged on opposite sides of the inlet conduit 211. A first slot 214 of the pair of slots can, in particular, be arranged upstream of a second slot 215 of the pair of slots. An upstream direction inside the inlet conduit 211 is defined as a direction opposite to the direction of fluid flow 219. The upstream direction extends from the valve core 218 to the inlet port 202.

Two ultrasonic transducers 216, 217 are secured relative to and/or mounted to the slots 214, 215. The ultrasonic transducers 216, 217 are arranged at a distance. A first ultrasonic transducer 216 is preferably arranged upstream of a second ultrasonic transducer 217. In an embodiment, the ultrasonic transducers 216, 217 are spaced at least twenty millimeters apart. The ultrasonic transducers 216, 217 can also be spaced at least fifty millimeters apart or even at least one hundred millimeters apart. Long distances between ultrasonic transducers can improve on accuracy.

The skilled person applies the same technical considerations to the transducers associated with FIG 5 and to the transducers associated with FIG 4.

The scope of the invention is only defined by the appended claims, but as described in detail herein, the instant disclosure teaches a valve comprising:
an inlet port (102; 202), an outlet port (103; 203), and a fluid conduit (104; 204) extending between the inlet port (102; 202) and the outlet port (103; 203);
a valve core comprising at least one flow restriction member (105, 109, 110; 218) and a portion of the fluid conduit (104; 204) enveloping the at least one flow restriction member (105, 109, 110; 218);
the fluid conduit (104; 204) comprising an inlet conduit (111; 211), the inlet conduit (111; 211) being interposed between the inlet port (102; 202) and the valve core and having a length dimension extending between the inlet port (102; 202) and the valve core;
the fluid conduit (104; 204) comprising an outlet conduit (112; 212), the outlet conduit (112; 212) being interposed between the valve core and the outlet port (103; 203) and having a length dimension extending between the valve core and the outlet port (103; 203);
the valve further comprising a valve body (101; 201) enveloping the inlet conduit (111; 211);
wherein the valve body (101; 201) has a first slot (114; 214) and has a second slot (115; 215), the first (114; 214) and the second (115; 215) slot being in fluid communication with the inlet conduit (111; 211), the first (114; 214) and the second (115; 215) slot being disposed on opposite sides of the inlet conduit (111; 211); and
wherein the length dimension of the inlet conduit (111; 211) exceeds the length dimension of the outlet conduit (112; 212) by at least ten percent.

According to the invention, the valve comprises at least one flow restriction member (105, 109, 110; 218) and a portion of the fluid conduit (104; 204) enclosing the at least one flow restriction member (105, 109, 110; 218).

According to the invention, the valve further comprises a valve body (101; 201) housing and/or surrounding and/or enclosing the inlet conduit (111; 211). The fluid conduit (104; 204) advantageously has a circular cross-section. The fluid conduit (104; 204) ideally is tubular. According to an aspect of the instant disclosure, the inlet conduit (111; 211) has a circular cross-section. The inlet conduit (111; 211) ideally is tubular. According to another aspect of the instant disclosure, the outlet conduit (112; 212) has a circular cross-section. The outlet conduit (112; 212) ideally is tubular.

According to the invention, the length dimension of the inlet conduit (111; 211) exceeds the length dimension of the outlet conduit (112; 212) by at least twenty percent. It is also envisaged that the length dimension of the inlet conduit (111; 211) exceeds the length dimension of the outlet conduit (112; 212) by at least fifty percent.

The inlet conduit (111; 211) has a first side and has a second side opposite the first side. The first slot (114; 214) is disposed on the first side of the inlet conduit (111; 211). The second slot (115; 215) is disposed on the second side of the inlet conduit (111; 211).

According to the invention, the valve core comprises at least one flow restriction member (105, 109, 110; 218) and a portion, preferably a cylindrical portion, of the fluid conduit (104; 204) surrounding and/or enclosing the at least one flow restriction member (105, 109, 110; 218).

According to the invention, the valve core comprises at least one flow restriction member (105, 109, 110; 218) and a portion, preferably a tubular portion, of the fluid conduit (104; 204) surrounding and/or enclosing the at least one flow restriction member (105, 109, 110; 218).

It is envisaged that the at least one flow restriction member (105, 109, 110; 218) is the at least one active member and/or is the at least one displaceable flow restriction member.

According to an aspect of the instant disclosure, the inlet conduit (111; 211) extends and/or runs from the inlet port (102; 202) to the valve core.

According to an aspect of the instant disclosure, the outlet conduit (112; 212) extends and/or runs from the valve core to the outlet port (103; 203)

An ultrasonic beam path (120; 220) advantageously extends between the first slot (114; 214) and the second slot (115; 215) .

The instant disclosure also teaches any of the aforementioned valves, wherein the length dimension of the inlet conduit (111; 211) is the shortest distance between the inlet port (102; 202) and the valve core.

The instant disclosure further teaches any of the aforementioned valves, wherein the length dimension of the outlet conduit (112; 212) is the shortest distance between the valve core and the outlet port (103; 203).

The present disclosure still further teaches any of the aforementioned valves, wherein the valve comprises a first ultrasonic transducer (116; 216) disposed in the first slot (114; 214) and a second ultrasonic transducer (117; 217) disposed in the second slot (115; 215).

The ultrasonic beam path (120; 220) can, in particular, extend between the first ultrasonic transducer (116; 216) and the second ultrasonic transducer (117; 217). It is envisaged that the inlet conduit (111; 211) has an axis such as a flow axis. The ultrasonic beam path (120; 220) and the axis of the inlet conduit (111, 211) advantageously form an (acute) angle of less than eighty degrees, more advantageously of less than seventy degrees, still more advantageously of less than fifty degrees.

The instant disclosure also teaches the aforementioned valve, wherein the first slot (114; 214) has a far end; and
wherein the first ultrasonic transducer (116; 216) is disposed at the far end of the first slot (114; 214).

The far end of the first slot (114; 214) preferably is far from the (centre of the) inlet conduit (111; 211).

The first slot (114; 214) ideally has a far end; and
the first ultrasonic transducer (116; 216) is disposed at or near the far end of the first slot (114; 214).

The instant disclosure also teaches the aforementioned valves,
wherein the second slot (115; 215) has a far end; and
wherein the second ultrasonic transducer (117; 217) is disposed at the far end of the second slot (115; 215).

The far end of the second slot (115; 215) preferably is far from the (centre of the) inlet conduit (111; 211).

The second slot (115; 215) ideally has a far end; and
the second ultrasonic transducer (117; 217) is disposed at or near the far end of the second slot (115; 215).

The present disclosure also teaches any of the aforementioned valves,
wherein the first slot (114; 214) is closer to the inlet port (102; 202) than the second slot (115; 215).

It is envisaged that the inlet port (102, 202) has a (geometric) centre; and that the first slot (114; 214) is closer to the (geometric) centre of the inlet port (102; 202) than the second slot (115; 215). Long distances between the slots confer advantages in terms of more accurate (flow rate) measurements.

It is also envisaged that the far end of the first slot (114; 214) is closer to the inlet port (102; 202) than the far end of the second slot (115; 215).

It is further envisaged that the inlet port (102, 202) has a (geometric) centre; and that the far end of the first slot (114; 214) is closer to the (geometric) centre of the inlet port (102; 202) than the far end of the second slot (115; 215). Long distances between the far ends of the slots confer advantages in terms of more accurate (flow rate) measurements.

In an embodiment, the first slot (114; 214) faces the inlet port (102; 202); and the second slot (115; 215) faces the valve core.

According to the invention, the valve core comprises a throttle (105) situated in the fluid conduit (104);
wherein the throttle (105) is movable between a closed position and an open position;
wherein the throttle (105) in the closed position closes the fluid conduit (104);
wherein the throttle (105) in the open position opens the fluid conduit (104);
wherein the valve core comprises a displaceable member (109) situated in the fluid conduit (104);
wherein the displaceable member (109) is moveable to increase a volume of the fluid conduit (104) such that the displaceable member (109) increases a flow rate through the fluid conduit (104), and to decrease the volume of the fluid conduit (104; 204) such that the displaceable member (109) lowers the flow rate through the fluid conduit (104); and
the valve comprising a biasing member coupled to the displaceable member (109) and configured to urge the displaceable member (109) such that the biasing member urges the volume of the fluid conduit (104) to increase, thereby increasing the flow rate through the fluid conduit (104).

According to the invention, the throttle (105) is selectively movable between a closed position and an open position. It is also envisaged that the displaceable member (109) is or comprises a piston.

According to an aspect of the present disclosure, the biasing member is or comprises a spring such as a helical spring and/or a compression spring and/or a helical compression spring.

In an embodiment, the fluid conduit (104) has a volume. It is also envisaged that the portion of the fluid conduit (104) comprised by the valve core has a volume.

The displaceable member (109) faces the throttle (105).

The throttle (105) and the displaceable member (109) are flow restriction members comprised by the valve core.

According to the invention, the displaceable member (109) is moveable to increase a volume of the portion of the fluid conduit (104) comprised by the valve core such that the displaceable member (109) increases a flow rate through the fluid conduit (104), and to decrease the volume of the portion of the fluid conduit (104; 204) comprised by the valve core such that the displaceable member (109) lowers the flow rate through the fluid conduit (104); and
the valve comprising a biasing member coupled to the displaceable member (109) and configured to urge the displaceable member (109) such that the biasing member urges the volume of the portion of the fluid conduit (104) comprised by the valve core to increase, thereby increasing the flow rate through the fluid conduit (104).

According to an example not forming part of the claimed invention, the valve core comprises a ball-type valve member (218);
wherein the ball-type valve member (218)is pivotally moveable between a closed position and an open position;
wherein the ball-type valve member (218) in the closed position closes the fluid conduit (204); and
wherein the ball-type valve member (218) in the open position opens the fluid conduit (204).

According to an example not forming part of the claimed invention,
the ball-type valve member (218) is pivotally moveable by ninety degrees between a closed position and an open position. That is, the valve is a quarter-turn valve.

According to an example not forming part of the claimed invention,
the ball-type valve member (218) is selectively and pivotally moveable between a closed position and an open position.

The ball-type valve member (218) is the at least one flow restriction member comprised by the valve core.

According to the invention, the inlet port (102; 202) has an inlet port diameter and the inlet conduit (111; 211) has an inlet conduit diameter, the inlet conduit diameter being at least ten percent less than the inlet port diameter, preferably at least fifteen percent less than the inlet port diameter, still more preferably at least twenty percent less than the inlet port diameter. Narrow inlet conduits result in fast fluid flow rates. Fast fluid flow rates confer advantages in terms of improved measurement accuracy.

The present disclosure also teaches a valve wherein the inlet conduit (111; 211) comprises a flow acceleration member. A flow acceleration member accelerates fluid flow in the conduit (111; 211). Any adverse effects caused by flow perturbations are thereby mitigated.

An example not forming part of the claimed invention teaches a three-way valve with a ball-type valve member. That is, the valve has three conduits in fluid communication with the valve core. In an embodiment, the valve comprises a first inlet conduit and a second inlet conduit and an outlet conduit (112; 212), the first and the second inlet conduits being in fluid communication with the valve core. In an alternate embodiment, the valve comprises a first outlet conduit and a second outlet conduit and an inlet conduit (111; 211), the first and the second outlet conduits being in fluid communication with the valve core.

An example not forming part of the claimed invention teaches a valve comprising:
an inlet port (102; 202), an outlet port (103; 203), and a fluid conduit (104; 204) extending between the inlet port (102; 202) and the outlet port (103; 203);
a valve core comprising at least one flow restriction member (105, 109, 110; 218) and a portion of the fluid conduit (104; 204) enveloping the at least one flow restriction member (105, 109, 110; 218);
the fluid conduit (104; 204) comprising an inlet conduit (111; 211), the inlet conduit (111; 211) being interposed between the inlet port (102; 202) and the valve core and having a length dimension extending between the inlet port (102; 202) and the valve core;
the fluid conduit (104; 204) comprising an outlet conduit (112; 212), the outlet conduit (112; 212) being interposed between the valve core and the outlet port (103; 203) and having a length dimension extending between the valve core and the outlet port (103; 203);
the valve further comprising a valve body (101; 201) enveloping the outlet conduit (112; 212);
wherein the valve body (101; 201) has a first slot and has a second slot, the first and the second slot being in fluid communication with the outlet conduit (112; 212), the first and the second slot being disposed on opposite sides of the outlet conduit (112; 212); and
wherein the length dimension of the outlet conduit (112; 212) exceeds the length dimension of the inlet conduit (111; 211) by at least ten percent.

According to an example not forming part of the claimed invention, the length dimension of the outlet conduit (112; 212) exceeds the length dimension of the inlet conduit (111; 211) by at least twenty percent. It is also envisaged that the length dimension of the outlet conduit (112; 212) exceeds the length dimension of the inlet conduit (111; 211) by at least fifty percent.

According to an example not forming part of the claimed invention, the outlet conduit (112; 212) has a first side and has a second side opposite the first side. The first slot is disposed on the first side of the outlet conduit (112; 212). The second slot is disposed on the second side of the outlet conduit (112; 212).

According to an aspect of the instant disclosure, the valve further comprises a valve body (101; 201) housing and/or surrounding and/or enclosing the outlet conduit (112; 212).

The aforementioned valves having inlet conduits (111; 211) and outlet conduits (112; 212) of different lengths form alternative solutions. They form alternative solutions to the problem of providing valves with extra space for flow rate measurements. The instant disclosure also teaches the aforementioned valve, wherein the length dimension of the outlet conduit (112; 212) is the shortest distance between the outlet port (103; 203) and the valve core.

The instant disclosure further teaches the aforementioned valves, wherein the length dimension of the inlet conduit (111; 211) is the shortest distance between inlet port (102; 202) and the valve core.

According to the claimed invention, the valve comprises a first ultrasonic transducer disposed in the first slot and a second ultrasonic transducer disposed in the second slot.

The instant disclosure still further teaches the aforementioned valves,
wherein the first slot has a far end; and
wherein the first ultrasonic transducer is disposed at the far end of the first slot.

The far end of the first slot preferably is far from the (centre of the) outlet conduit (112; 212).

The first slot advantageously has a far end; and
the first ultrasonic transducer is disposed at or near the far end of the first slot.

The instant disclosure yet further teaches the aforementioned valves,
wherein the second slot has a far end; and
wherein the second ultrasonic transducer is disposed at the far end of the second slot.

The far end of the second slot preferably is far from the (centre of the) outlet conduit (112; 212).

The second slot ideally has a far end; and
the second ultrasonic transducer is disposed at or near the far end of the second slot.

According to an aspect of the instant disclosure, the outlet port (103; 203) has an outlet port diameter and the outlet conduit (112; 212) has an outlet conduit diameter, the outlet conduit diameter being less than the outlet port diameter. The outlet conduit diameter preferably is at least ten percent less than the outlet port diameter, more preferably at least fifteen percent less than the outlet port diameter, still more preferably at least twenty percent less than the outlet port diameter. Narrow outlet conduits result in fast fluid flow rates. Fast fluid flow rates confer advantages in terms of improved measurement accuracy.

The present disclosure also teaches a valve wherein the outlet conduit (112; 212) comprises a flow acceleration member. A flow acceleration member accelerates fluid flow in the conduit (112; 212). Any adverse effects caused by flow perturbations are thereby mitigated.

Any steps of a method according to the present disclosure may be embodied in hardware, in a software module executed by a processor, in a software module being executed using operating-system-level virtualization, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

Reference numerals
- 1: valve body
- 2: inlet port
- 3: outlet port
- 4: fluid conduit
- 5: throttle
- 6: stem
- 7: arrow indicating possible movements of the stem 6
- 8: bearing surrounding the stem 6
- 9: displaceable member (comprising a piston)
- 10: cover
- 11: inlet conduit
- 12: outlet conduit
- 13: flow rate
- 14: pressure difference
- 15: curve describing a valve without pressure independence
- 16: curve describing a valve with pressure independence
- 17: first valve position
- 18: first flow rate
- 19: second valve position
- 20: second flow rate
- 21: elevated flow rate
- 101: valve body
- 102: inlet port
- 103: outlet port
- 104: fluid conduit
- 105: throttle
- 109: displaceable member, in particular piston
- 110: cover
- 111: inlet conduit
- 112: outlet conduit
- 113: extra portion
- 114: slot
- 115: slot
- 116: ultrasonic transducer
- 117: ultrasonic transducer
- 120: ultrasonic beam path
- 201: valve body
- 202: inlet port
- 203: outlet port
- 204: fluid conduit
- 211: inlet conduit
- 212: outlet conduit
- 214: slot
- 215: slot
- 216: ultrasonic transducer
- 217: ultrasonic transducer
- 218: valve member
- 219: direction of flow
- 220: ultrasonic beam path

## Claims

1. A valve comprising:
an inlet port (102), an outlet port (103), and a fluid conduit (104) extending between the inlet port (102) and the outlet port (103);
a valve core comprising at least one flow restriction member (105, 109, 110) and a portion of the fluid conduit (104) enveloping the at least one flow restriction member (105, 109, 110);
the fluid conduit (104) comprising an inlet conduit (111), the inlet conduit (111) being interposed between the inlet port (102) and the valve core and having a length dimension extending between the inlet port (102) and the valve core;
the fluid conduit (104) comprising an outlet conduit (112), the outlet conduit (112) being interposed between the valve core and the outlet port (103) and having a length dimension extending between the valve core and the outlet port (103);
the valve further comprising a valve body (101) enveloping the inlet conduit (111);
wherein the valve core comprises a throttle (105) situated in the fluid conduit (104);
wherein the throttle (105) is movable between a closed position and an open position;
wherein the throttle (105) in the closed position closes the fluid conduit (104);
wherein the throttle (105) in the open position opens the fluid conduit (104);
wherein the valve core comprises a displaceable member (109) situated in the fluid conduit (104);
wherein the displaceable member (109) is moveable to increase a volume of the fluid conduit (104) such that the displaceable member (109) increases a flow rate through the fluid conduit (104), and to decrease the volume of the fluid conduit (104) such that the displaceable member (109) lowers the flow rate through the fluid conduit (104);
the valve comprising a biasing member coupled to the displaceable member (109) and configured to urge the displaceable member (109) such that the biasing member urges the volume of the fluid conduit (104) to increase, thereby increasing the flow rate through the fluid conduit (104);
wherein the displaceable member (109) faces the throttle (105);
**characterized in that**
the valve body (101) has a first slot (114) and has a second slot (115), the first (114) and the second (115) slot being in fluid communication with the inlet conduit (111), the first (114) and the second (115) slot being disposed on opposite sides of the inlet conduit (111); and **in that**
the length dimension of the inlet conduit (111) exceeds the length dimension of the outlet conduit (112) by at least ten percent; and **in that**
the valve comprises a first ultrasonic transducer (116) disposed in the first slot (114) and a second ultrasonic transducer (117) disposed in the second slot (115); and **in that**
the inlet conduit (111) diameter is at least ten percent less than the inlet port (102) diameter.

2. The valve according to claim 1, wherein the length dimension of the inlet conduit (111) is the shortest distance between the inlet port (102) and the valve core.

3. The valve according to any of the claims 1 to 2, wherein the length dimension of the outlet conduit (112) is the shortest distance between the valve core and the outlet port (103).

4. The valve according to claim 1,
wherein the first slot (114) has a far end; and
wherein the first ultrasonic transducer (116) is disposed at the far end of the first slot (114).

5. The valve according to any of the claims 1 to 4,
wherein the second slot (115) has a far end; and
wherein the second ultrasonic transducer (117) is disposed at the far end of the second slot (115).

6. The valve according to any of the claims 1 to 5,
wherein the first slot (114) is closer to the inlet port (102) than the second slot (115).

## Patentansprüche

1. Ventil, das Folgendes umfasst:
eine Einlassöffnung (102), eine Auslassöffnung (103) und eine Fluidleitung (104), die sich zwischen der Einlassöffnung (102) und der Auslassöffnung (103) erstreckt,
einen Ventilkern, der mindestens ein Fließbeschränkungselement (105, 109, 110) und einen Abschnitt der Fluidleitung (104) umfasst, die das mindestens eine Fließbeschränkungsteil (105, 109, 110) umschließt,
wobei die Fluidleitung (104) eine Einlassleitung (111) umfasst, wobei die Einlassleitung (111) zwischen der Einlassöffnung (102) und dem Ventilkern eingefügt ist und eine Längenabmessung aufweist, die sich zwischen der Einlassöffnung (102) und dem Ventilkern erstreckt,
wobei die Fluidleitung (104) eine Auslassleitung (112) umfasst, wobei die Auslassleitung (112) zwischen dem Ventilkern und der Auslassöffnung (103) eingefügt ist und eine Längenabmessung aufweist, die sich zwischen dem Ventilkern und der Auslassöffnung (103) erstreckt,
wobei das Ventil ferner einen Ventilkörper (101) umfasst, der die Einlassleitung (111) umschließt,
wobei der Ventilkern eine Drossel (105) umfasst, die sich in der Fluidleitung (104) befindet,
wobei die Drossel (105) zwischen einer geschlossenen Position und einer offenen Position bewegbar ist,
wobei die Drossel (105) in der geschlossenen Position die Fluidleitung (104) schließt,
wobei die Drossel (105) in der offenen Position die Fluidleitung (104) öffnet,
wobei der Ventilkern ein verschiebbares Element (109) umfasst, das sich in der Fluidleitung (104) befindet,
wobei das verschiebbare Element (109) bewegbar ist, um ein Volumen der Fluidleitung (104) derart zu erhöhen, dass das verschiebbare Element (109) eine Flussrate durch die Fluidleitung (104) erhöht, und das Volumen der Fluidleitung (104) derart zu verringern, dass das verschiebbare Element (109) die Flussrate durch die Fluidleitung (104) senkt,
wobei das Ventil ein Vorspannelement umfasst, das mit dem verschiebbaren Element (109) gekoppelt und dazu konfiguriert ist, das verschiebbare Element (109) derart zu beaufschlagen, dass das Vorspannelement bewirkt, dass das Volumen der Fluidleitung (104) zunimmt, wodurch die Flussrate durch die Fluidleitung (104) erhöht wird,
wobei das Vorspannelement (109) der Drossel (105) zugewandt ist,
**dadurch gekennzeichnet, dass**
der Ventilkörper (101) einen ersten Schlitz (114) aufweist und einen zweiten Schlitz (115) aufweist, wobei der erste (114) und der zweite Schlitz (115) in Fluidverbindung mit der Einlassleitung (111) stehen, wobei der erste (114) und der zweite Schlitz (115) auf gegenüberliegenden Seiten der Einlassleitung (111) angeordnet sind, und dadurch, dass
die Längenabmessung der Einlassleitung (111) die Längenabmessung der Auslassleitung (112) um mindestens zehn Prozent übersteigt, und dadurch, dass
das Ventil einen ersten Ultraschallwandler (116), der in dem ersten Schlitz (114) angeordnet ist, und einen zweiten Ultraschallwandler (117), der in dem zweiten Schlitz (115) angeordnet ist, umfasst, und dadurch, dass
der Durchmesser der Einlassleitung (11) mindestens zehn Prozent kleiner ist als der Durchmesser der Einlassöffnung (102) .

2. Das Ventil nach Anspruch 1, wobei die Längenabmessung der Einlassleitung (111) der kürzeste Abstand zwischen der Einlassöffnung (102) und dem Ventilkern ist.

3. Das Ventil nach einem der Ansprüche 1 bis 2, wobei die Längenabmessung der Auslassleitung (112) der kürzeste Abstand zwischen dem Ventilkern und der Auslassöffnung (103) ist.

4. Das Ventil nach Anspruch 1,
wobei der erste Schlitz (114) ein entferntes Ende aufweist und
wobei der erste Ultraschallwandler (116) an dem entfernten Ende des ersten Schlitzes (114) angeordnet ist.

5. Das Ventil nach einem der Ansprüche 1 bis 4,
wobei der zweite Schlitz (115) ein entferntes Ende aufweist und
wobei der zweite Ultraschallwandler (117) an dem entfernten Ende des zweiten Schlitzes (115) angeordnet ist.

6. Das Ventil nach einem der Ansprüche 1 bis 5,
wobei der erste Schlitz (114) näher an der Einlassöffnung (102) ist als der zweite Schlitz (115).

## Revendications

1. Vanne comprenant :
un orifice d'entrée (102), un orifice de sortie (103), et un conduit de fluide (104) s'étendant entre l'orifice d'entrée (102) et l'orifice de sortie (103) ;
un noyau de vanne comprenant au moins un élément de restriction de débit (105, 109, 110) et une partie du conduit de fluide (104) enveloppant le au moins un élément de restriction de débit (105, 109, 110) ;
le conduit de fluide (104) comprenant un conduit d'entrée (111), le conduit d'entrée (111) étant intercalé entre l'orifice d'entrée (102) et le noyau de vanne et comprenant une dimension en longueur s'étendant entre l'orifice d'entrée (102) et le noyau de vanne ;
le conduit de fluide (104) comprenant un conduit de sortie (112), le conduit de sortie (112) étant intercalé entre le noyau de vanne et l'orifice de sortie (103) et comprenant une dimension en longueur s'étendant entre le noyau de vanne et l'orifice de sortie (103) ;
la vanne comprenant en outre un corps de vanne (101) enveloppant le conduit d'entrée (111) ;
dans laquelle le noyau de vanne comprend un papillon (105) situé dans le conduit de fluide (104) ;
dans laquelle le papillon (105) est mobile entre une position fermée et une position ouverte ;
dans laquelle le papillon (105) dans la position fermée ferme le conduit de fluide (104) ;
dans laquelle le papillon (105) dans la position ouverte ouvre le conduit de fluide (104) ;
dans laquelle le noyau de vanne comprend un élément pouvant être déplacé (109) situé dans le conduit de fluide (104) ;
dans laquelle l'élément pouvant être déplacé (109) est mobile afin d'augmenter un volume du conduit de fluide (104) de sorte que l'élément pouvant être déplacé (109) augmente un débit à travers le conduit de fluide (104), et afin de diminuer le volume du conduit de fluide (104) de sorte que l'élément pouvant être déplacé (109) réduise le débit à travers le conduit de fluide (104) ;
la vanne comprenant un élément de polarisation raccordé à l'élément pouvant être déplacé (109) et configuré afin de pousser l'élément pouvant être déplacé (109) de sorte que l'élément de polarisation pousse le volume du conduit de fluide (104) à augmenter, en augmentant ainsi le débit à travers le conduit de fluide (104) ;
dans laquelle l'élément pouvant être déplacé (109) fait face au papillon (105) ;
**caractérisée en ce que**
le corps de vanne (101) comprenant une première fente (114) et comprenant une seconde fente (115), la première (114) et la seconde (115) fentes étant en communication fluidique avec le conduit d'entrée (111), la première (114) et la seconde (115) fentes étant disposées sur des côtés opposés du conduit d'entrée (111) ; et **en ce que**
la dimension en longueur du conduit d'entrée (111) dépasse la dimension en longueur du conduit de sortie (112) d'au moins dix pour cent ; et **en ce que**
la vanne comprend un premier transducteur à ultrasons (116) disposé dans la première fente (114) et un second transducteur à ultrasons (117) disposé dans la seconde fente (115) ; et **en ce que**
le diamètre du conduit d'entrée (111) est au moins dix pour cent inférieur au diamètre de l'orifice d'entrée (102).

2. La vanne selon la revendication 1, dans laquelle la dimension en longueur du conduit d'entrée (111) est la plus courte distance entre l'orifice d'entrée (102) et le noyau de vanne.

3. La vanne selon l'une quelconque des revendications 1 à 2, dans laquelle la dimension en longueur du conduit de sortie (112) est la plus courte distance entre le noyau de vanne et l'orifice de sortie (103).

4. La vanne selon la revendication 1,
la première fente (114) comprenant une extrémité éloignée ; et
dans laquelle le premier transducteur à ultrasons (116) est disposé à l'extrémité éloignée de la première fente (114).

5. La vanne selon l'une quelconque des revendications 1 à 4,
la seconde fente (115) comprenant une extrémité éloignée ; et
dans laquelle le second transducteur à ultrasons (117) est disposé à l'extrémité éloignée de la seconde fente (115).

6. La vanne selon l'une quelconque des revendications 1 à 5,
dans laquelle la première fente (114) est plus proche de l'orifice d'entrée (102) que la seconde fente (115).
